# EUROPEAN PATENT APPLICATION

(11) **EP 2 677 782 A1**
(43) Date of publication of application: **25.12.2013**
(21) Application number: 12746742.1
(22) Date of filing: 07.02.2012
(51) Int. Cl.: H04W 4/22, H04M 11/04, H04W 80/10

(54) **MOBILE COMMUNICATIONS METHOD AND CALL SESSION CONTROL NODE**

(30) Priority: 14.02.2011 JP 2011029234
(71) Applicant: NTT DoCoMo, Inc., Tokyo 100-6150 (JP)
(72) Inventor: NISHIDA, Katsutoshi, Tokyo 100-6150 (JP); TOKUNAGA, Kazuhito, Tokyo 100-6150 (JP)
(74) Representative: HOFFMANN EITLE
(86) International application number: PCT/JP2012/052681
(87) International publication number: WO 2012/111473

(57) **Abstract**

A mobile communication method according to the present invention includes a step A of establishing a connection in a core network for an emergency call originated by UE, a step B of performing "IMS emergency registration processing originated by the UE", and a step C of performing processing for originating the emergency call from the UE. In the step B, a "Cell ID" of a serving cell for the UE saved in an HSS is transmitted to an IMS. In the step C, the IMS selects an emergency notification device 10 as a connection destination of the emergency call based on the "Cell ID" of the serving cell for the UE.

## Description

### TECHNICAL FIELD

The present invention relates to a mobile communication method and a call session control node.

### BACKGROUND ART

An operation for sending an emergency call via an IMS is specified in 3GPP TS23.167 and TS23.401.

According to the operation, UE (user equipment, or a mobile station) is configured to first complete connection (emergency PDN connection) establishment with a PDN (packet data network) for an emergency call and "IMS emergency registration processing" via the connection, and thereafter to transmit "INVITE", which is an SIP (session initiation protocol) signal that indicates sending of an emergency call, to a P-CSCF (proxy call session control function, or a call session control node) in an IMS (IP multimedia subsystem, or a service control network).

Here, the IMS is configured to select a connection destination of the emergency call based on location information of the UE after receiving the "INVITE".

### PRIOR ART DOCUMENTS

### NON-PATENT DOCUMENTS

Non-patent Document 1: 3GPP TS23.167
Non-patent Document 2: 3GPP TS23.401

### SUMMARY OF THE INVENTION

### PROBLEM TO BE SOLVED BY THE INVENTION

However, in a conventional mobile communication system specified in 3GPP TS23.167, after receiving the "INVITE" from the UE, the P-CSCF forwards the "INVITE" to an E-CSCF (emergency call session control function, or an emergency-call call session control node). Then, the E-CSCF acquires a "Cell ID" of a serving cell for the UE as the location information of the UE by way of an LRF (location retrieval function), selects an emergency notification device to be connected, and then transmits the "INVITE" to the emergency notification device.

As a consequence, there has been a problem of an increase in delay from the start of the processing for originating the emergency call to completion of the connection establishment of the emergency call.

The present invention has been made in view of the above-mentioned problem. An objective of the present invention is to provide a mobile communication method and a call session control node, which are capable of reducing a delay from a start of processing for originating an emergency call to completion of connection establishment of the emergency call.

### MEANS FOR SOLVING THE PROBLEM

A first feature of the present invention is summarized in that a mobile communication method including: a step A of establishing a connection in a core network for an emergency call originated by a mobile station; a step B of performing processing for registration with a service control network for the emergency call originated by the mobile station; and a step C of performing processing for originating the emergency call from the mobile station, wherein identification information of a serving cell for the mobile station saved in a subscriber management server is transmitted to the service control network in the step B, and the service control network selects an emergency notification device as a connection destination of the emergency call based on the identification information of the serving cell for the mobile station in the step C.

A second feature of the present invention is summarized in that a call session control node configured to provide a service to a mobile station, wherein the call session control node acquires identification information of a serving cell for the mobile station when acquiring subscriber information on the mobile station.

### EFFECTS OF THE INVENTION

As described above, according to the present invention, it is possible to provide a mobile communication method and a call session control node, which are capable of reducing a delay from a start of processing for originating an emergency call to completion of connection establishment of the emergency call.

### BRIEF DESCRIPTION OF THE DRAWINGS

[Fig. 1] Fig. 1 is a view for describing an overall configuration and operations of a mobile communication system according to a first embodiment of the present invention.
[Fig. 2] Fig. 2 is a sequence diagram showing the operations of the mobile communication system according to the first embodiment of the present invention.
[Fig. 3] Fig. 3 is another sequence diagram showing the operations of the mobile communication system according to the first embodiment of the present invention.
[Fig. 4] Fig. 4 is another sequence diagram showing the operations of the mobile communication system according to the first embodiment of the present invention.
[Fig. 5] Fig. 5 is another sequence diagram showing the operations of the mobile communication system according to the first embodiment of the present invention.
[Fig. 6] Fig. 6 is a sequence diagram showing operations of a mobile communication system according to a first modified example of the present invention.

### MODES FOR CARRYING OUT THE INVENTION

### (Mobile communication system according to first embodiment of present invention)

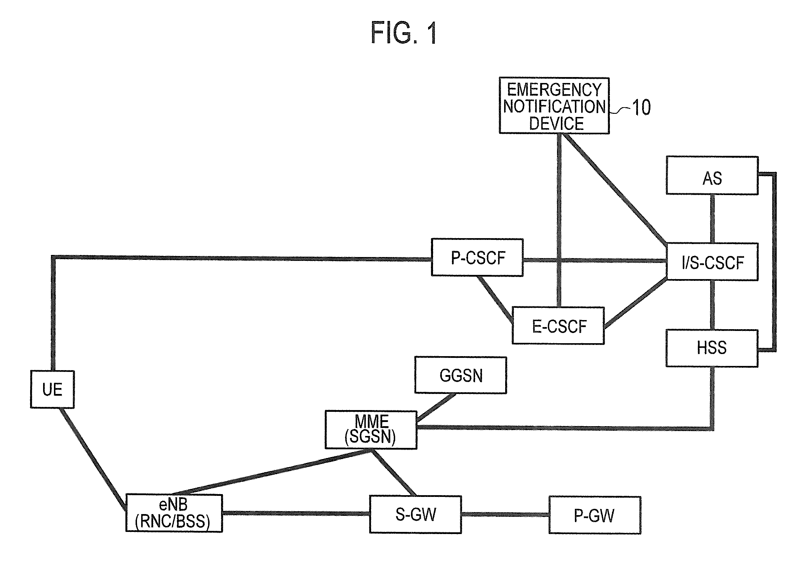

A mobile communication system according to a first embodiment of the present invention will be described with reference to Fig. 1 to Fig. 5.

As shown in Fig. 1, the mobile communication system of the embodiment is a mobile communication system accommodating an E-UTRAN (evolved universal terrestrial radio access network).

As shown in Fig. 1, in the mobile communication system of the embodiment, the E-UTRAN includes an eNB (a radio base station).

Moreover, the mobile communication system of the embodiment includes an MME (mobility management entity, or a mobility management node), an S/P-GW (serving/PDN-gateway, or a gateway device), which are located in a core network that accommodates the E-UTRAN.

In addition, the mobile communication system of the embodiment includes an AS (application server), an S-CSCF (serving call session control function, or a UE serving call session control node), an I-CSCF (interrogate call session control function), an E-CSCF, and the like which are located in an IMS.

Here, the mobile communication system of the embodiment includes an HSS (home subscriber server, or a subscriber management server), an emergency notification device 10 as a connection destination of an emergency call, and the like.

Note that the present invention is also applicable to a mobile communication system accommodating a UTRAN (universal terrestrial radio access network) / GERAN (GSM EDGE radio access network), and the like.

In this case, an SGSN/GGSN (serving/gateway GPRS support node, or a packet switch) is provided instead of the above-described MME while an RNC (radio network controller, or a radio network control station) / BSS (radio base station) is provided instead of the above-described eNB.

In Fig. 1, a signal between UE and a P-CSCF is forwarded via any of the SGSN, the S-GW, the P-GW, and the GGSN.

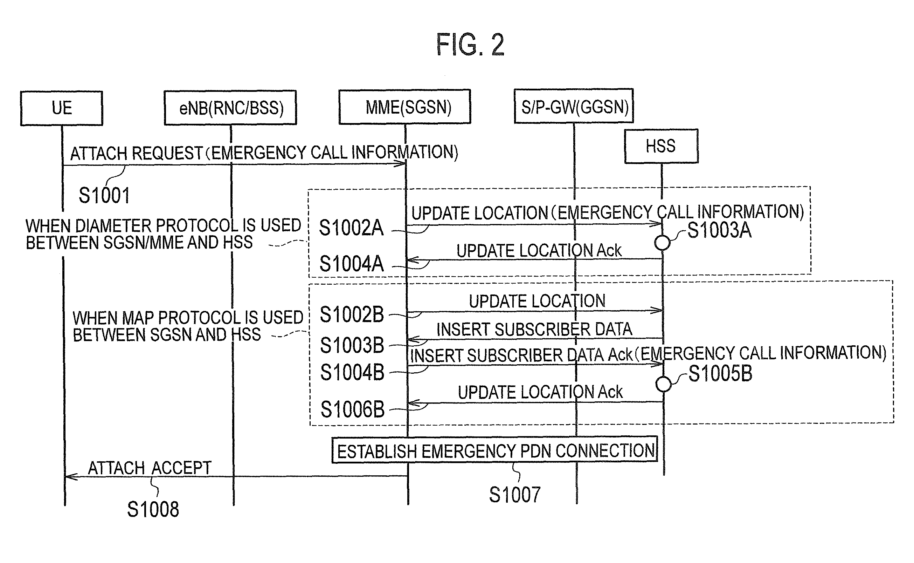

Operations of the mobile communication system according to the first embodiment of the present invention will be described below with reference Fig. 2 to Fig. 5.

First, "Emergency Attach processing (attach processing for an emergency call)" in the mobile communication system according to the first embodiment of the present invention will be described with reference to Fig. 2.

As shown in Fig. 2, in step S1001, the UE transmits "Attach Request", which includes emergency call information that indicates processing concerning an emergency call, to the MME (or the SGSN) being a serving device.

When the Diameter protocol is used between the MME (the SGSN) and the HSS, the MME (the SGSN) sends the HSS "Update Location" including a "Cell ID" of a serving cell for the UE and emergency information in step S1002A.

In step S1003A, the HSS saves the "Cell ID" of the serving cell for the UE and the emergency information. In step S1004A, the HSS transmits "Update Location Ack" to the MME (the SGSN).

On the other hand, when the MAP (mobile application part) protocol is used between the MME (the SGSN) and the HSS, the MME (the SGSN) transmits "Update Location" to the HSS in step S1002B.

In step S1003B, the HSS transmits "Insert Subscriber Data" to the MME (the SGSN). In step S1004B, the MME (the SGSN) sends the HSS "Insert Subscriber Data Ack" including the "cell ID" of the serving cell for the UE and the emergency information.

In step S1005B, the HSS saves the "Cell ID" of the serving cell for the UE and the emergency information. In step S1006B, the HSS transmits "Update Location Ack" to the MME (the SGSN).

Here, the MME (the SGSN) may be configured to judge whether or not the UE is a subscriber terminal to an operator managing the MME (the SGSN).

The MME (the SGSN) may further be configured to notify the above-described "cell ID" of the serving cell for the UE only when the UE is judged to be the subscriber terminal to the operator managing the MME (the SGSN).

In the meantime, the MME (the SGSN) does not need to include the emergency call information in the "Update Location" or the "Insert Subscriber Data Ack".

The "emergency attach processing" in Fig. 2 shows the "cell ID" of the serving cell for the UE as an example of the location information (serving information) of the UE. However, other location information of the UE (such as a location registration area or area identification information unique to the operator) may be transmitted instead of or together with the "Cell ID". The same applies to the following descriptions on the "Cell ID" in this specification.

In step S1007, an emergency PDN connection is established between the MME (the SGSN) and the S/P-GW (or the GGSN).

In step S1008, the MME (the SGSN) transmits "Attach Accept" to the UE.

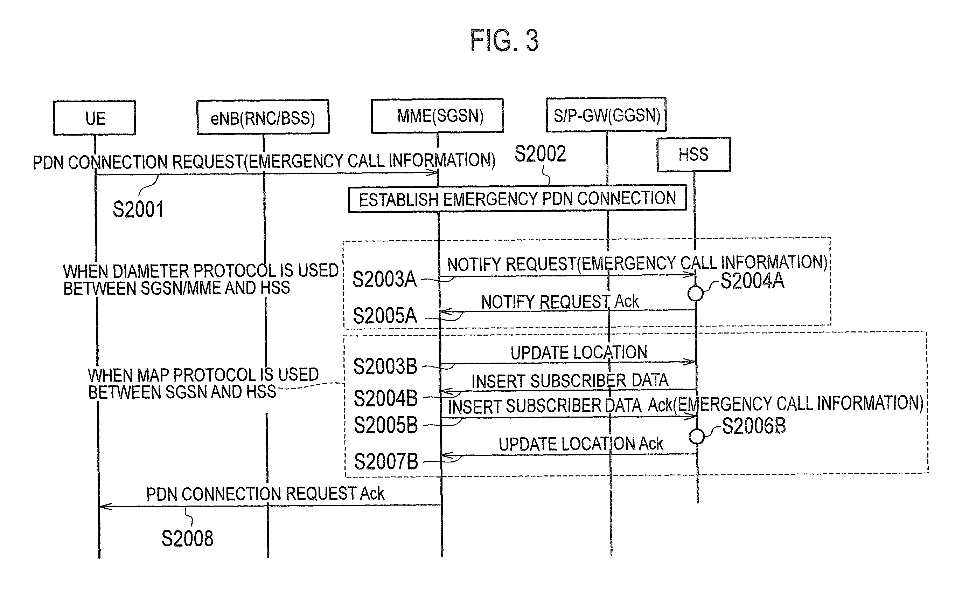

Second, "emergency PDN connection establishment processing (processing for establishing a connection for an emergency call originated by the UE)" in the mobile communication system according to the first embodiment of the present invention will be described with reference to Fig. 3.

In step S2001, the UE transmits "PDN connection request", which includes emergency call information that indicates processing concerning the emergency call, to the MME (the SGSN) being the serving device.

In step S2002, the emergency PDN connection is established between the MME (the SGSN) and the S/P-GW (the GGSN) .

When the Diameter protocol is used between the MME (the SGSN) and the HSS, the MME (the SGSN) sends the HSS "Notify Request" including the "Cell ID" of the serving cell for the UE and the emergency information in step S2003A.

In step S2004A, the HSS saves the "Cell ID" of the serving cell for the UE and the emergency information. In step S2005A, the HSS transmits "Notify Request Ack" to the MME (the SGSN).

On the other hand, when the MAP protocol is used between the MME (the SGSN) and the HSS, the MME (the SGSN) transmits "Update Location" to the HSS in step S2003B.

In step S2004B, the HSS transmits "Insert Subscriber Data" to the MME (the SGSN). In step S2005B, the MME (the SGSN) sends the HSS "Insert Subscriber Data Ack" including the "Cell ID" of the serving cell for the UE and the emergency information.

In step S2006B, the HSS saves the "Cell ID" of the serving cell for the UE and the emergency information. In step S2007B, the HSS transmits "Update Location Ack" to the MME (the SGSN).

Here, the MME (the SGSN) maybe configured to judge whether or not the UE is the subscriber terminal to the operator managing the MME (the SGSN).

The MME (the SGSN) may further be configured to notify the above-described "Cell ID" of the serving cell for the UE only when the UE is judged to be the subscriber terminal to the operator managing the MME (the SGSN).

In the meantime, the MME (the SGSN) does not need to include the emergency call information in the "Notify Request" or the "Insert Subscriber Data Ack".

Meanwhile, the MME (the SGSN) may be configured to notify the "Cell ID" of the serving cell for the UE and the emergency call information described above by using a message other than the "Notify Request" or the "Insert Subscriber Data Ack".

In step S2008, the MME (the SGSN) transmits "PDA Connection Request Ack" to the UE.

Note that the "emergency PDN connection establishment processing" does not need to be executed when the "Emergency Attach processing" shown in Fig. 2 is executed.

In the "Emergency Attach processing" shown in Fig. 2 and the "emergency PDN connection establishment processing" shown in Fig. 3, the HSS may delete the received "Cell ID" after a lapse of a predetermined time period, or after reception of notification from the MME or the S-CSCF concerning expiration of any of the "Emergency Attach processing", the "emergency PDN connection establishment processing", and "IMS emergency registration processing".

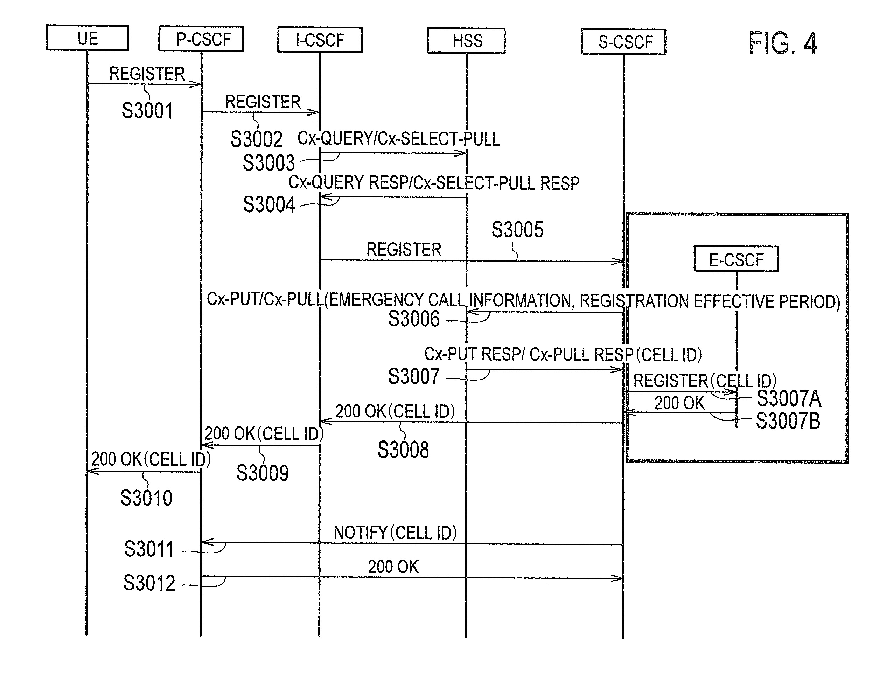

Third, the "IMS emergency registration processing (processing for registration with an emergency-call service control network)" in the mobile communication system according to the first embodiment of the present invention will be described with reference to Fig. 4.

As shown in Fig. 4, in step S3001, the UE transmits "Register" to the P-CSCF. In step S3002, the P-CSCF transmits "Register" to the I-CSCF.

In step S3003, the I-CSCF transmits "Cx-Query/Cx-Select-Pull" to the HSS.

Here, the HSS is assumed to have already acquired and saved the "Cell ID" of the serving cell for the UE in the course of the "Emergency Attach processing" shown in Fig. 2 or the "emergency PDN connection establishment processing" shown in Fig. 3.

In step S3004, the HSS transmits "Cx-Query Resp/Cx-Select-Pull Resp" to the I-CSCF.

In step S3005, the I-CSCF transmits "Register" to the S-CSCF.

In step S3006, the S-CSCF sends the HSS "Cx-Put/Cx-Pull" including the emergency call information and a registration valid period.

In step S3007, the HSS transmits "Cx-Put Resp/Cx-Pull Resp" to the S-CSCF.

Here, the HSS may notify the S-CSCF of the "Cell ID" of the serving cell for the UE by using the "Cx-Put Resp/Cx-Pull Resp" upon judging that the relevant processing is the "IMS emergency registration processing".

In step S3007A, the S-CSCF sends the E-CSCF "Register" including the "Cell ID" of the serving cell for the UE. Here, the S-CSCF does not need to include the "Cell ID" of the serving cell for the UE in the "Register".

In step S3007B, the E-CSCF transmits "200 OK" to the S-CSCF.

The steps S3007A and S3007B do not always have to be carried out. In such a case, the emergency notification device 10 is selected by the S-CSCF, the AS or the P-CSCF.

In step S3008, the S-CSCF sends the I-CSCF "200 OK" including the "Cell ID" of the serving cell for the UE. In step S3009, the I-CSCF sends the P-CSCF "200 OK" including the "Cell ID" of the serving cell for the UE.

Here, the S-CSCF and the I-CSCF do not need to include the "Cell ID" of the serving cell for the UE in the "200 OK". Alternatively, the S-CSCF or the I-CSCF may use another message to notify the I-CSCF or the P-CSCF of the "Cell ID" of the serving cell for the UE.

In step S3010, the P-CSCF transmits "200 OK" to the UE.

Instead of including the "Cell ID" of the serving cell for the UE in the "200 OK" in step S3008, the S-CSCF may send the P-CSCF "Notify" including the "Cell ID" of the serving cell for the UE in step S3011.

In this case, the P-CSCF transmits "200 OK" to the S-CSCF in step S3012.

Here, the AS may acquire the "Cell ID" of the serving cell for the UE in the course of the "IMS emergency registration processing" shown in Fig. 4.

Meanwhile, in Fig. 4, the S-CSCF may acquire the "Cell ID" of the serving cell for the UE when the "Notify Request" is transmitted from the MME to the HSS or when the S-CSCF inquires of the HSS about the subscriber information as shown in Fig. 2 and Fig. 3.

In the latter case, if the HSS does not have the "Cell ID" of the serving cell for the UE, for example, the HSS may acquire the "Cell ID" of the serving cell for the UE from the MME in response to the inquiry from the S-CSCF about the subscriber information.

Specifically, in step S3006 in Fig. 4, for example, the HSS may inquire of the MME about the "Cell ID" of the serving cell for the UE in response to the reception of the "Cx-Put/Cx-Pull".

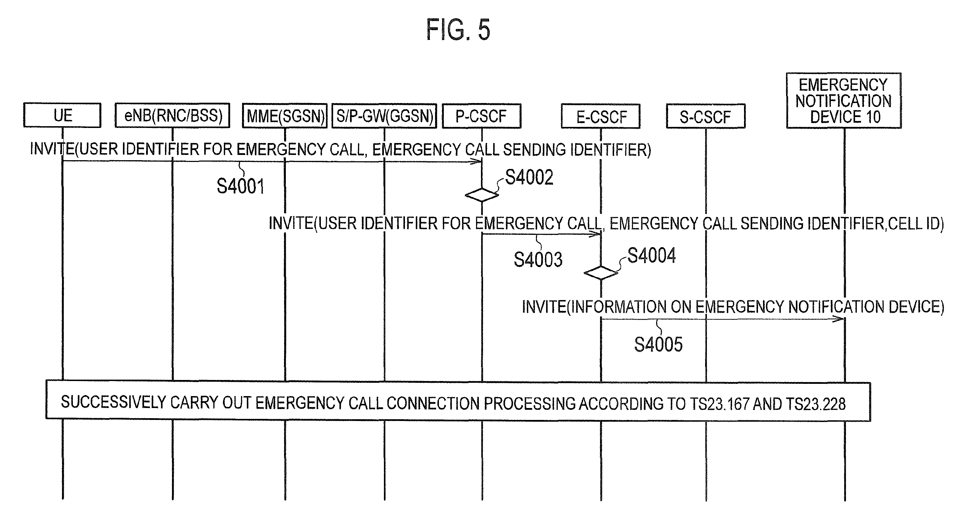

Fourth, processing for originating the emergency call from the UE in the mobile communication system according to the first embodiment of the present invention will be described with reference to Fig. 5.

As shown in Fig. 5, in step S4001, the UE sends the P-CSCF "INVITE" including a user identifier of the UE for the emergency call and an emergency call sending identifier. Here, another type of user identifier may be used as the user identifier of the UE for the emergency call.

In step S4002, the P-CSCF selects the E-CSCF.

Here, the P-CSCF may identify the "Cell ID" of the serving cell for the UE acquired and saved in the course of the "IMS emergency registration processing" shown in Fig. 4, by using the user identifier of the UE for the emergency call.

Alternatively, the P-CSCF may identify the "Cell ID" of the serving cell for the UE acquired and saved in the course of the "IMS emergency registration processing" shown in Fig. 4, in consideration of other information included in the "INVITE".

In addition, the P-CSCF may select the E-CSCF based on the "Cell ID" of the serving cell for the UE saved in the P-CSCF.

In step S4003, The P-CSCF sends the E-CSCF "INVITE" including the user identifier of the UE for the emergency call , the emergency call sending identifier, and the "Cell ID" of the serving cell for the UE. Here, another type of user identifier may be used as the user identifier of the UE for the emergency call.

When the E-CSCF acquires and saves the "Cell ID" of the serving cell for the UE in the course of the "IMS emergency registration processing" shown in Fig. 4, the P-CSCF does not need to include the "Cell ID" of the serving cell for the UE in the "INVITE".

In step S4004, the E-CSCF selects the emergency notification device 10 as the connection destination of the emergency call based on the "Cell ID" of the serving cell for the UE.

Here, the E-CSCF may select the emergency notification device 10 as the connection destination of the emergency call based on the "Cell ID" of the serving cell for the UE included in the "INVITE" from the P-CSCF, or may select the emergency notification device 10 as the connection destination of the emergency call based on the "Cell ID" of the serving cell for the UE saved in the E-CSCF.

Alternatively, the E-CSCF may select the emergency notification device 10 as the connection destination of the emergency call in consideration of: other location information of the UE that the E-CSCF is capable of acquiring; operator policies; and the like.

In step S4005, the E-CSCF transmits "INVITE" to the selected emergency notification device 10. Here, the E-CSCF may include information on the selected emergency notification device 10 in the "INVITE".

Further, in the "INVITE", the E-CSCF may include the location information of the UE, such as the "Cell ID" of the serving cell for the UE or latitude-longitude information of the UE.

Thereafter, emergency call connection processing is carried out in accordance with 3GPP TS23.167 and TS23.228.

Here, when the UE is not a roaming UE and when either the S-CSCF or the AS connecting to the S-CSCF carries out emergency call routing, the "INVITE" in step S4003 may be forwarded to the S-CSCF.

In this case, the "INVITE" may be or may be not routed through the E-CSCF.

In this case, the P-CSCF does not need to set the "Cell ID" of the serving cell for the UE in the "INVITE". Here, the S-CSCF or the AS receiving the "INVITE" may select the emergency notification device 10 as the connection destination of the emergency call based on the "Cell ID" of the serving cell for the UE.

According to the mobile communication system of the first embodiment of the present invention, the P-CSCF located in the IMS can acquire and save the "Cell ID" of the serving cell for the UE in the course of the "IMS emergency registration processing" before the P-CSCF receives the "INVITE". Thus, it is possible to reduce a delay from the reception of the "INVITE" to connection to the emergency notification device 10.

### (First Modified Example)

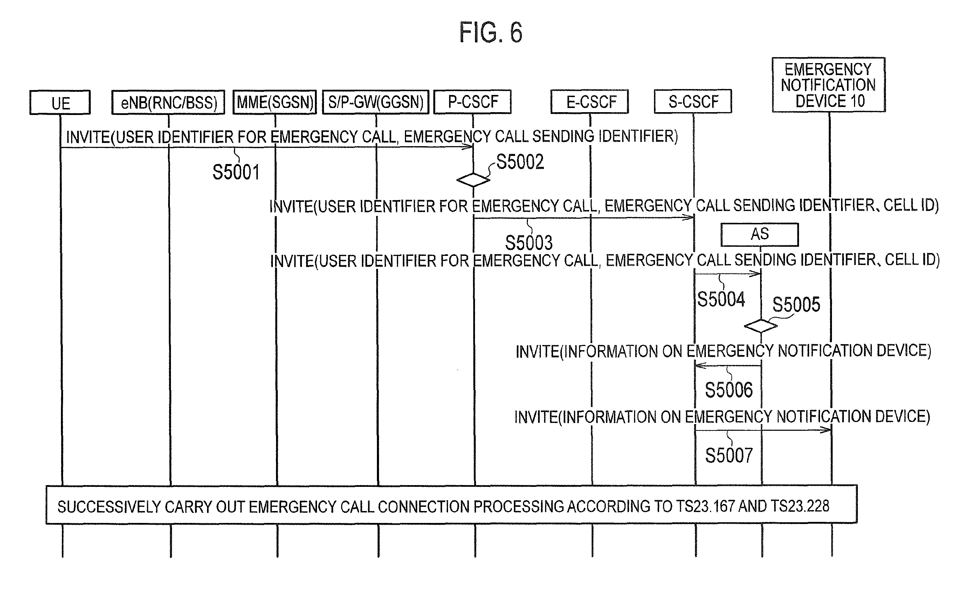

A mobile communication system according to a first modified example will be described with reference to Fig. 6. Here, the mobile communication system according to the first modified example will be described below while being focused on its different features from those of the above-described first embodiment.

Now, the processing for originating the emergency call from the UE in the mobile communication system according to the first modified example of the present invention will be described with reference to Fig. 6.

As shown in Fig. 6, in step S5001, the UE sends the P-CSCF "INVITE" including the user identifier of the UE for the emergency call and the emergency call sending identifier. Here, another type of user identifier may be used as the user identifier of the UE for the emergency call.

In step S5002, the P-CSCF selects the S-CSCF.

Here, the P-CSCF may identify the "Cell ID" of the serving cell for the UE acquired and saved in the course of the "IMS emergency registration processing" shown in Fig. 4, by using the user identifier of the UE for the emergency call.

Alternatively, the P-CSCF may identify the "Cell ID" of the serving cell for the UE acquired and saved in the course of the "IMS emergency registration processing" shown in Fig. 4, in consideration of other information included in the "INVITE".

In addition, the P-CSCF may select the S-CSCF based on the saved "Cell ID" of the serving cell for the UE.

In step S5003, the P-CSCF sends the S-CSCF "INVITE" including the user identifier of the UE for the emergency call, the emergency call sending identifier, and the "Cell ID" of the serving cell for the UE. Here, another type of user identifier may be used as the user identifier of the UE for the emergency call.

In step S5004, the S-CSCF sends the AS "INVITE" including the user identifier of the UE for the emergency call, the emergency call sending identifier, and the "cell ID" of the serving cell for the UE. Here, another type of user identifier may be used as the user identifier of the UE for the emergency call.

In step S5005, the AS selects the emergency notification device 10 as the connection destination of the emergency call based on the "Cell ID" of the serving cell for the UE.

Here, the AS may select the emergency notification device 10 as the connection destination of the emergency call in consideration of: other location information of the UE that the AS is capable of acquiring (the location information of the UE acquired from the HSS); the operator policies; and the like.

In step S5006, the AS sends the S-CSCF "INVITE" including information on the selected emergency notification device 10.

Here, the AS may include the "Cell ID" of the serving cell for the UE and the location information of the UE, such as latitude-longitude information of the UE, in the "INVITE".

In step S5007, the S-CSCF transmits "INVITE" to the selected emergency notification device 10. Here, the S-CSCF may include the information on the selected emergency notification device 10 in the "INVITE".

Here, the S-CSCF may include the "Cell ID" of the serving cell for the UE and the location information of the UE, such as latitude-longitude information of the UE, in the "INVITE".

Thereafter, the emergency call connection processing is carried out in accordance with 3GPP TS23.167 and TS23.228.

Here, if the S-CSCF selects the emergency notification device 10 as the connection destination of the emergency call, then the operations from steps S5004 to S5006 are omitted.

In this case, the S-CSCF may select the emergency notification device 10 as the connection destination of the emergency call in consideration of: other location information of the UE that the S-CSCF is capable of acquiring (the location information of the UE acquired from the HSS); the operator policies; and the like.

Although the present invention has been described the example of reducing the time for selecting the emergency notification device 10, the present invention is applicable not only to an emergency call but is also applicable, as a scheme for rapidly selecting a connection destination, to a service where PDN connection establishment processing and sending processing for communications originated by the UE are performed at the same time.

For example, the operation described in Fig. 4 (the operation in which the HSS having received the "Cx-Put/Cx-Pull" in step S3006 acquires the "Cell ID" from the serving device) may be applied to a case of "IMS registration processing" for a normal call other than an IMS emergency call. Thus, a call session control node can acquire the "Cell ID" by taking advantage of normal "IMS registration processing", and perform incoming call control and the like based on the serving information at the time of the "IMS registration processing".

The above-described features of the embodiment may also be expressed as follows.

A first feature of the embodiment provides a mobile communication method, which includes a step A of establishing a connection in a core network for an emergency call originated by UE (a mobile station), a step B of performing "IMS emergency registration processing (processing for registration with a service control network for the emergency call) originated by the UE ", and a step C of performing processing for originating the emergency call from the UE. Here, the method is characterized in that a "Cell ID (identification information) " of a serving cell for the UE saved in an HSS (a subscriber management server) is transmitted to an IMS (the service control network) in the step B, and the IMS selects an emergency notification device 10 as a connection destination of the emergency call based on the "Cell ID" of the serving cell for the UE in the step C.

The first feature of the embodiment may further include a step of performing "Emergency Attach processing (attach processing for the emergency call) " originated by the UE, and the "Cell ID" of the serving cell for the UE may be transmitted to the HSS in this step.

Here, this step may include: judging whether or not valid profile information of the UE is saved or whether or not the UE is roaming; and then judging whether or not to send the HSS the "Cell ID" of the serving cell for the UE based on a result of the above judgment.

In the first feature of the embodiment, the "Cell ID" of the serving cell for the UE may be transmitted to the HSS in the step A.

Here, the step A may include: judging whether or not valid profile information of the UE is saved or whether or not the UE is roaming; and then judging whether or not to send the HSS the "Cell ID" of the serving cell for the UE may be made based on a result of the above judgment.

In the first feature of the embodiment, an E-CSCF (an emergency-call call session control node) located in the IMS may select the emergency notification device 10 as the connection destination of the emergency call based on the "Cell ID" of the serving cell for the UE in the step C.

In the first feature of the embodiment, an AS (an application server) located in the IMS may select the emergency notification device 10 as the connection destination of the emergency call based on the "Cell ID" of the serving cell for the UE in the step C.

In the first feature of the embodiment, an S-CSCF (a serving call session control node for the mobile station) located in the IMS may select the emergency notification device 10 as the connection destination of the emergency call based on the "Cell ID" of the serving cell for the UE in the step C.

A second feature of the embodiment provides an S-CSCF (a call session control node) configured to provide a service to UE, which is characterized in that the S-CSCF acquires a "Cell ID" of a serving cell for the UE when acquiring subscriber information on the UE.

Here, the operations of the UE, the eNB/RNC/BSS, the MME/SGSN, the S/P-GW/GGSN, the HSS, the P-CSCF, the S-CSCF, the I-CSCF, the E-CSCF, the AS, and the like described above may be implemented by hardware, software modules to be executed by a processor, or a combination of the hardware and the software modules.

The software modules may be provided in a storage medium of any form including a RAM (random access memory), a flash memory, a ROM (read only memory), an EPROM (erasable programmable ROM), an EEPROM (electronically erasable and programmable ROM), a register, a hard disk, a removable disk, a CD-ROM, and the like.

The storage medium is connected to the processor so that the processor can write and read information in and out of the storage medium. The storage medium may be integrated with the processor. The storage medium and the processor may be provided in an ASIC. The ASIC may be incorporated in the UE, the eNB/RNC/BSS, the MME/SGSN, the S/P-GW/GGSN, the HSS, the P-CSCF, the S-CSCF, the I-CSCF, the E-CSCF, the AS, and the like. Alternatively, the storage medium and the processor may be provided as discrete components in the UE, the eNB/RNC/BSS, the MME/SGSN, the S/P-GW/GGSN, the HSS, the P-CSCF, the S-CSCF, the I-CSCF, the E-CSCF, the AS, and the like.

The present invent has been described in detail by using the embodiment. However, it is obvious to those skilled in the art that the present invention is not limited only to the embodiment described in this specification. The present invention can also be implemented as modified and altered aspects without departing from the gist and scope of the invention to be defined by the appended claims. Thus, the description of the specification is intended merely for describing examples and does not impose any limitations to the present invention.

### EXPLANATION OF REFERENCE NUMERALS

- HSS: subscriber management server
- MME: mobility management node
- S-GW, P-GW: gateway device
- P-CSCF, E-CSCF, I-CSCF, S-CSCF: call session control node
- AS: application server
- UE: mobile station

## Claims

1. A mobile communication method comprising:
a step A of establishing a connection in a core network for an emergency call originated by a mobile station;
a step B of performing processing for registration with a service control network for the emergency call originated by the mobile station; and
a step C of performing processing for originating the emergency call from the mobile station, wherein
identification information of a serving cell for the mobile station saved in a subscriber management server is transmitted to the service control network in the step B, and
the service control network selects an emergency notification device as a connection destination of the emergency call based on the identification information of the serving cell for the mobile station in the step C.

2. The mobile communication method according to claim 1, comprising:
an additional step of performing attach processing for the emergency call originated by the mobile station, wherein
the identification information of the serving cell for the mobile station is transmitted to the subscriber management server in the additional step.

3. The mobile communication method according to claim 1, wherein the identification information of the serving cell for the mobile station is transmitted to the subscriber management server in the step A.

4. The mobile communication method according to claim 1, wherein an emergency-call call session control node located in the service control network selects the emergency notification device as the connection destination of the emergency call based on the identification information of the serving cell for the mobile station in the step C.

5. The mobile communication method according to claim 1, wherein an application server located in the service control network selects the emergency notification device as the connection destination of the emergency call based on the identification information of the serving cell for the mobile station in the step C.

6. The mobile communication method according to claim 1, wherein a serving call session control node for the mobile station located in the service control network selects the emergency notification device as the connection destination of the emergency call based on the identification information of the serving cell for the mobile station in the step C.

7. The mobile communication method according to claim 2, wherein, the additional step includes: judging whether or not valid profile information of the mobile station is saved or whether or not the mobile station is roaming; and then judging whether or not to send the subscriber management server the identification information of the serving cell for the mobile station based on a result of the former judgment.

8. The mobile communication method according to claim 3, wherein, the step A includes: judging whether or not valid profile information of the mobile station is saved or whether or not the mobile station is roaming; and then judging whether or not to send the subscriber management server the identification information of the serving cell for the mobile station based on a result of the former judgment.

9. A call session control node configured to provide a service to a mobile station, wherein the call session control node acquires identification information of a serving cell for the mobile station when acquiring subscriber information on the mobile station.
